# EUROPEAN PATENT APPLICATION

(11) **EP 2 098 804 A2**
(43) Date of publication of application: **09.09.2009**
(21) Application number: 09250530.4
(22) Date of filing: 26.02.2009
(51) Int. Cl.: F24J 2/04, H01L 31/048

(54) **Roof tile or tiled solar thermal collector**

(30) Priority: 04.03.2008 US 73300
(71) Applicant: General Electric Company, Schenectady, NY 12345 (US)
(72) Inventor: Curtin, Gerald, Niskayuna, New York 12309 (US); Ressler, Stephen, Wilmington, Delaware 19808 (US)
(74) Representative: Bedford, Grant Richard

(57) **Abstract**

A building roof tile system and integrated solar energy system is disclosed that includes a solar thermal collector (20) which is intended to replace a standard flat concrete roof tile (42) or an S-tile type clay roof tile so as to be integrated with the concrete tiles (42) and photovoltaic ("PV") solar panels (10) that are also designed to look like common concrete roof tiles (42). The solar thermal collector includes mounting components that allow the collector to be mounted in a manner similar to that of the concrete and PV roof tiles (42), so as to be discretely integrated with the other roof tiles (42, 10).

## Description

The present invention is directed generally to solar panels for roofs, and more particularly, to a building roof tile system and integrated solar energy system that includes a thermal solar collector which is designed to replace standard flat cement roof tiles or S-tile type roof tiles.

Solar thermal systems collect heat from the sun and use it to heat space or water. Solar thermal systems include components that collect the solar heat, store the heat, and deliver the heat to where it is needed.

Solar collectors are the components of solar thermal systems that collect solar heat. Typically, they sit on the roof of a house, where they are readily visible. There are several different types of solar collectors.

The most common type of solar collector is the glazed flat plate collector. This type of collector includes a weatherproofed, insulated box or frame containing a metal absorber plate with built-in pipes. Typically, it is two to three inches thick and resembles a skylight. Typically, it is also mounted directly on, or just above, the roof of a house so that is placed in the path of sunlight. The pipes built into the absorber carry a heat transfer fluid that is usually water, but can be a different fluid, such as propylene glycol. The absorber sits within the collector and is usually black or other dark color to absorb the most solar energy possible. The flat plate collector also includes a transparent or translucent cover over the absorber. The cover is typically a solar safety glass, which functions to slow down heat loss and trap solar energy inside the collector. Insulation on the bottom of the collector, behind the absorber, and on the sides, reduces conductive heat loss. Solar energy heats up water in the pipes causing it to circulate through the system, and passed to a storage tank located within the house.

Another type of solar collector is the evacuated tube solar collector that is made up of rows of parallel, glass tubes. There are several types of evacuated tubes, sometimes also referred to as "solar tubes" or "heat pipes", used in this type of collector. The first type consists of two glass tubes which are fused together at one end. The inner tube is coated with a selective surface that absorbs solar energy well but inhibits radiated heat loss. The air is withdrawn, or "evacuated" from the space between the two glass tubes to form a vacuum, which eliminates conductive and convective heat loss. The second type consists of a single glass tube with a flat or curved aluminum plate inside the tube is that is attached to a copper heat pipe or water flow pipe. The aluminum plate is generally coated with Tinox, or similar selective coating. The third uses glass tubes that incorporate a water flow path into the tube itself. In this type of collector, the solar tubes or heat pipes act as heat absorbers inside larger evacuated glass tubes. The evacuated glass tubes act like a thermos to hold in the absorbed heat. The heat pipes hold a fluid that vaporizes at low temperatures and is resistant to freezing. The vapor rises in each of the individual heat pipes or solar tubes and warms up a carrier fluid in a manifold. After giving up its heat, the vaporized fluid condenses to a liquid, and then flows back into the base of the heat pipe or solar tube. The evacuated tube collectors must be properly angled to allow for the ongoing process of fluid vaporizing and condensing.

A further type of solar collector is the unglazed flat plate collector. This type of collector includes an absorber that incorporates channels for water flow. The absorber can be made from a variety of materials, including metal or extruded polypropylene plastic. The water flow channels capture solar energy to warm the water in the channels. Because unglazed flat plate collectors are light weight and come in different sizes, they are installed in a number of locations, such as on roofs, trellises or outbuildings.

Typically, however, solar collectors are mounted on roofs using low profile standoff mounts. Most collectors are installed just above, and parallel to, a roof. Usually, one or two collectors are installed. The standoff mounts hold the solar collectors above the roof surfaces, allowing air and runoff to flow beneath them.

Photovoltaic ("PV") solar power generation uses photovoltaic arrays to convert solar energy to electricity. PV systems are made with semiconductors, like the materials used for integrated circuits. The semiconductors convert sunlight into direct current (DC) power. The basic part of a typical PV system is the cell, which is typically a small silicone square that generates a small amount of DC voltage. Cells are combined to create a PV module or panel. A module is a stand alone piece that is enclosed between sheets of tempered glass or plastic to protect the cells. The cells can be mono-crystalline, multi-crystalline or amorphous. PV systems typically include inverters to convert the DC current generated by the PV system into AC current and batteries to store power that is generated by the system.

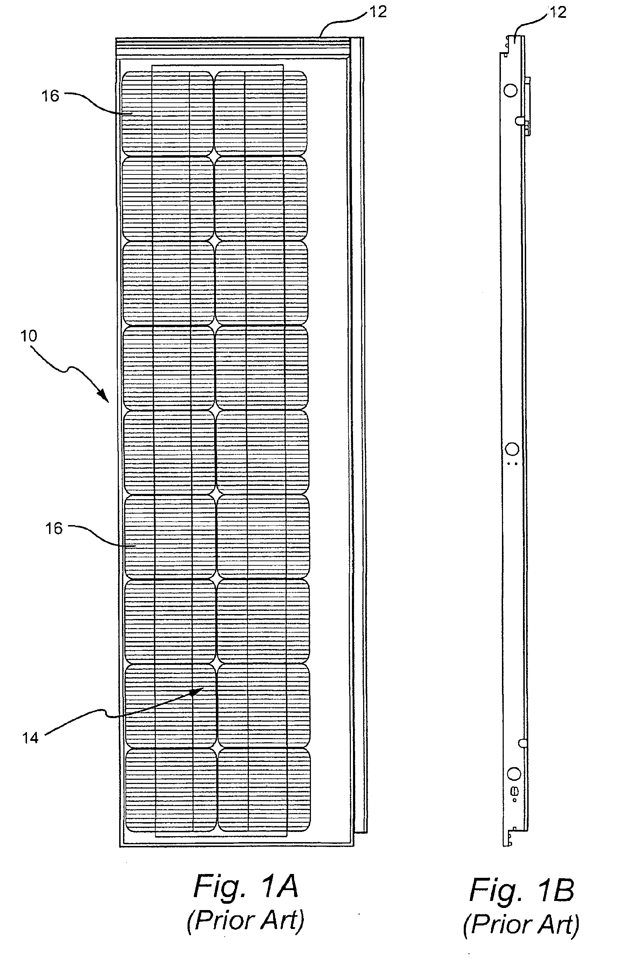

PV solar modules can span a range of wattage outputs. One type of PV panel made by the General Electric Company, i.e., GEPVp-066-G, is designed to look like common concrete roof tiles so that the panels blend discretely with the concrete tiles on a roof on which they are placed. Figures 1A to IC are top, side and bottom views, respectively, of the GEPVp-066 panel. The panel has a specified length, width and depth of frame. It contains 18 single-crystal or multicrystalline cells connected in series to generate a specified wattage output.

In an exemplary embodiment of the invention, a building roof tile system and integrated solar energy system comprises a plurality of concrete roof tiles covering a first portion of the building roof, a plurality of solar electric roof tiles covering a second portion of the building roof, with each of the solar electric roof tiles including a plurality of photovoltaic cells connected together to generate electric power, and at least one solar thermal roof tile covering a third portion of the building roof, the at least one solar thermal roof tile including an absorber with pipes carry a heat transfer fluid for absorbing and transporting solar heat. The plurality of solar electric roof tiles and the at least one solar thermal roof tile each are sized, shaped and mounted on the roof so as to blend with the concrete roof tiles mounted on the roof.

The plurality of solar electric roof tiles can be positioned on the building roof so as to be contiguous to one another in an area corresponding to the second portion of the building roof, and the at least one solar thermal roof tile is positioned on the building roof adjacent to the plurality of solar electric roof tiles. The plurality of solar electric roof tiles and the at least one solar thermal roof tile can also be positioned on the building roof so as to be substantially in the center of the building roof and the plurality of concrete roof tiles can be positioned on the building roof so as to surround the plurality of solar electric roof tiles and the at least one solar thermal roof tile. Preferably, a plurality of solar thermal roof tiles are mounted on the building roof and used with the plurality of solar electric roof tiles.

Each of the plurality of solar thermal roof tiles further includes either a transparent or translucent cover over an absorber with pipes carrying a heat transfer fluid to trap and absorb solar energy inside the solar thermal roof tile or heat pipes inside of rows of parallel, evacuated glass tubes, the pipes acting as heat absorbers inside the larger glass tubes. Preferably, the absorber or heat pipes are a black metal designed to absorb a maximum amount of solar energy, and the heat transfer fluid in the absorber pipes or heat pipes transfers heat to a storage tank. Preferably, the absorber pipes or heat pipes in the plurality of solar thermal roof tiles are connected to one another so that cold water enters the pipes and hot water leaves the pipes as a result of the plurality of solar thermal roof tiles absorbing solar energy.

Various aspects and embodiments of the present invention will now be described in connection with the accompanying drawings, in which:
Figures 1A to 1C are top, side and bottom views, respectively, of a photovoltaic module that is designed to blend discretely into a roof that includes common flat concrete roof tiles or S-tile type clay roof tiles.
Figures 2A and 2B are top and side views, respectively, of a solar thermal collector of an embodiment of the present invention that is designed to blend discretely into a roof that includes common concrete roof tiles.
Figure 3 is a side cross-sectional view of the solar thermal collector roof tiles shown in Figure 2.
Figure 4 is a perspective view of a building roof that includes common flat concrete roof tiles or S-tile type roof tiles, a plurality of PV modules designed to look like common flat concrete roof tiles, and two solar thermal collectors according to an embodiment of the present invention, also designed to look like common flat concrete roof tiles.

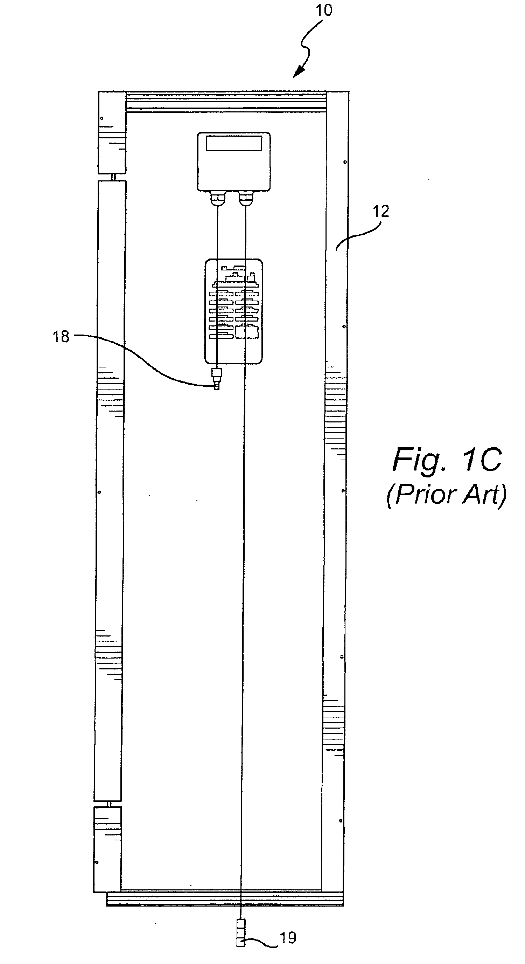

Figures 1A, 1B and 1C are top, side and bottom views, respectively, of a photovoltaic solar module 10 that is designed to generate between 50-90watts of power. The module 10 is a building integrated module, in that it is designed to look like common concrete roof tiles so that it blends discretely into a roof on which it is placed. The module 10 includes a frame 12 of a specified length, width and depth designed to conform the module 10 to the size of a standard concrete roof tile. Mounted within the frame 12 is an array 14 of single-crystal cells 16 connected in series to produce a specified amount of power generated by module 10. Preferably, there are 18 cells 16 comprising array 14 that produce between 50-90 watts of power. Connecting the array 14 of cell 16 to other modules 10 and/or equipment using the power generated by module 10 are a positive lead 18 and a negative lead 19 shown in Figure 1C.

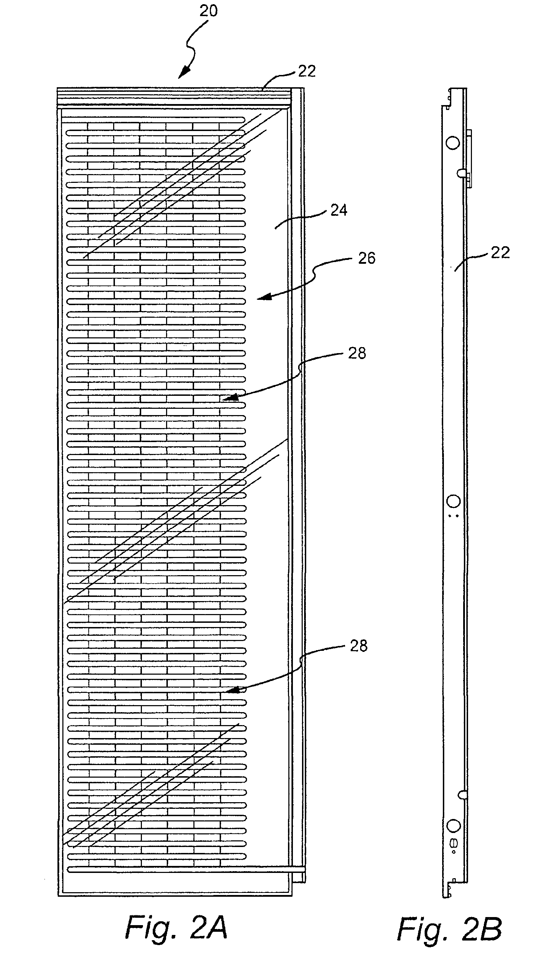

Figures 2A and 2B are top and side views, respectively, of a solar thermal collector 20 according to the present invention. Solar thermal collector 20 includes a frame 22, which has a specified length, width and depth, again, designed to conform the collector 20 to the size of a standard concrete roof tile. Located within the frame 22 of collector 20 is an absorber 24, with a built-in plurality of pipes 26 carrying a heat transfer fluid, such as water or propylene glycol. Preferably, absorber 24 is black to absorb the most solar energy possible. Enclosing frame 22 is a transparent cover 28 which functions to slow down heat loss and trap solar energy inside the collector 20.

The solar thermal collector 20 of the present invention is designed to replace a standard flat cement roof tile, so as to be integrated with the cement tiles like the photovoltaic solar module 10 shown in Figures 1A to 1C. Because the mounting components of solar thermal collector 20 are also designed to replace a standard flat cement roof tile, the mounting method used for thermal solar collector 20 is similar to that of a roof tile. In a preferred embodiment of the solar thermal collector 20, the collector has dimensions and mounting methodology that is also similar to that of the photovoltaic solar module 10. Thus, the solar thermal collector 20 of the embodiment of the present invention includes advantages, such as its ability to replace a roofing tile component, as opposed to being mounted on top of a roofing material, such as current solar collectors are typically mounted. Because it is mounted in a similar method to cement roof tiles, its integration with such roof tiles allows an aesthetic advantage over current solar collectors systems.

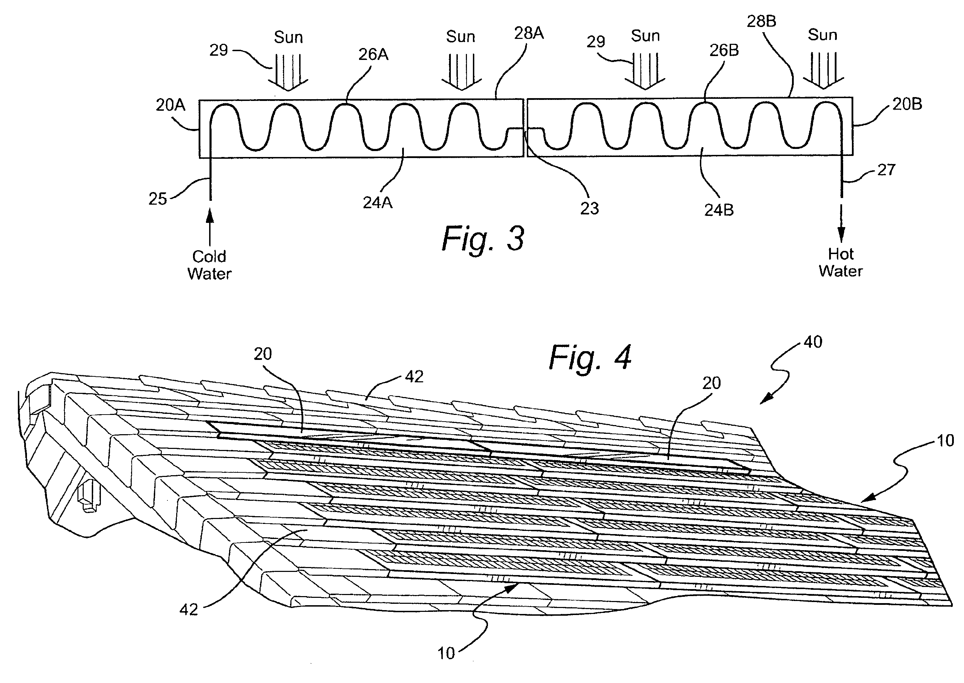

In the solar thermal collector 20, which is similar in appearance to the photovoltaic solar module 10, the PV cells 16 are replaced by an absorber plate 24 (or evacuated tubes) with built-in pipes 26, wherein a liquid solution transfers heat generated by the sun to a hot water tank located within a home. Multiple solar thermal collector 20 modules can be connected together through piping to amplify the transfer rate of heat from the sun. Figure 3 shows two solar thermal collector tiles 20 in cross-section. As discussed above, and as shown in Figure 3, each thermal solar collector tile 20 includes an absorber 24 with pipes 26 and a transparent cover 28 through which the rays of sun 29 pass to heat a heat transfer fluid in pipes 26. On one side of the pair of solar thermal collector panels 20A and 20B is a pipe 25 containing cold water, by way of example, which enters the first absorber 24A in the first solar collector thermal collector panel 20A. The cold water passes through the pipes 26A of absorber 24A and collects heat from the sun, then, passes through a connection 23 and into the pipes 26B of absorber 24B, where it continues to absorb heat from the sun. A second pipe 27 exiting from the second solar panel collector 20B contains hot water that is then stored in a tank located in the house on which the solar collectors 20A and 20B are mounted.

Figure 4 shows a roofing arrangement 40, which includes a plurality of flat cement tiles 42, a plurality of PV roof tiles 10 and a couple of solar thermal collector tiles 20 according to the present invention. Because the solar thermal collector tiles 20 of the present invention are designed to replace standard flat cement roof tiles 42 (or s-tiles), and have dimensions similar to that of the PV roof tile 10 shown in Figures 1A to 1C, the solar thermal collector tiles 20 of an embodiment of the present invention can be used with both the standard cement roof tiles 42 and with the PV roof tiles 10. This is a key advantage of various embodiments of the present invention, which is the integration of the solar thermal collector tile 20 with standard concrete roofing tile (either flat or S-tile), as opposed to the surface-mounted solar collector versions offered today, as well as the marrying of the solar thermal collector tile 20 with the existing PV roof tile 10, so as to produce a better operating solar system, including both PV and solar collector components for performing different functions.

As can be seen from Figure 4, the solar thermal collector panels 20 have a shape and dimensional aspects similar to the flat concrete tiles 42 and the PV roof tiles 10, so that the solar thermal collector panel 20 blend into the roof 40 of the house. In practice, the solar thermal collector tiles 20 are used as a complimentary component to a roof-integrated PV solar electric tile system. The solar thermal tiles 20 are preferably placed in the uppermost portion of the tile system.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

Various aspects and embodiments of the present invention are now defined by the following numbered clauses:
1. A building roof tile system and integrated solar energy system comprising:
   a plurality of concrete roof tiles covering a first portion of the building roof,
   a plurality of solar electric roof tiles covering a second portion of the building roof, each of the solar electric roof tiles including a plurality of photovoltaic cells connected together to generate electric power, and
   at least one solar thermal roof tile covering a third portion of the building roof, the at least one solar thermal roof tile including an absorber with pipes carry a heat transfer fluid for absorbing and transporting solar heat or a plurality of evacuated glass tubes with heat pipes inside carrying a heat transfer fluid for absorbing and transporting solar heat,
   the plurality of solar electric roof tiles and the at least one solar thermal roof tile each being sized, shaped and mounted on the roof so that the plurality of solar electric roof tiles and the at least one solar thermal roof tile blend discretely into the roof with the plurality of concrete roof tiles on the roof.
2. The building roof tile system and integrated solar energy system of clause 1, wherein the plurality of solar electric roof tiles and the at least one solar thermal roof tile each includes a frame having a length, width and height similar to a concrete roof tile's length, width and height so that the plurality of solar electric roof tiles and the at least one solar thermal roof tile blend with the plurality of concrete roof tiles, when mounted on the roof.
3. The building roof tile system and integrated solar energy system of any preceding clause, wherein the plurality of solar electric roof tiles are positioned on the building roof so as to be contiguous to one another in an area corresponding to the second portion of the building roof, and wherein the at least one solar thermal roof tile is positioned on the building roof adjacent to the plurality of solar electric roof tiles.
4. The building roof tile system and integrated solar energy system of any preceding clause, wherein the plurality of solar electric roof tiles and the at least one solar thermal roof tile are positioned on the building roof so as to be substantially in the center of the building roof and the plurality of concrete roof tiles are positioned on the building roof so as to surround the plurality of solar electric roof tiles and the at least one solar thermal roof tile.
5. The building roof tile system and integrated solar energy system of any preceding clause, wherein a plurality of solar thermal roof tiles are mounted on the building roof and used with the plurality of solar electric roof tiles.
6. The building roof tile system and integrated solar energy system of any preceding clause, wherein each of the plurality of solar thermal roof tiles includes the absorber with pipes carry a heat transfer fluid and a transparent cover to trap solar energy inside the solar thermal roof tile.
7. The building roof tile system and integrated solar energy system of any preceding clause, wherein the at least one solar thermal roof tile includes the absorber with pipes carry a heat transfer fluid and a transparent cover to trap solar energy inside the solar thermal roof tile.
8. The building roof tile system and integrated solar energy system of any preceding clause, wherein the absorber is a dark metal sheet designed to absorb solar energy and the absorber pipes carry a heat transfer fluid that is water.
9. The building roof tile system and integrated solar energy system of any preceding clause, wherein the each of the plurality of solar thermal roof tiles includes the heat pipes and the heat pipes are dark colored metal pipes carrying a heat transfer fluid that is water.
10. The building roof tile system and integrated solar energy system of any preceding clause, wherein each of the plurality of solar thermal roof tiles includes an absorber with pipes carry a heat transfer fluid that is water, and wherein the pipes are connected to one another so that cold water enters the pipes and hot water leaves the pipes as a result of the plurality of solar thermal roof tiles absorbing solar energy.
11. The building roof tile system and integrated solar energy system of any preceding clause, wherein each of the plurality of solar thermal roof tiles includes the heat pipes carrying a heat transfer fluid that is water , and wherein the heat pipes are connected to one another so that cold water enters the pipes and hot water leaves the pipes as a result of the plurality of solar thermal roof tiles absorbing solar energy.
12. A building roof tile system and integrated solar energy system comprising:
   a plurality of concrete roof tiles covering a first portion of the building roof, and
   at least one solar thermal roof tile covering a second portion of the building roof, the at least one solar thermal roof tile including an absorber with pipes carry a heat transfer fluid for absorbing and transporting solar heat,
   the at least one solar thermal roof tile being sized, shaped and mounted on the roof so that the at least one solar thermal roof tile blends discretely into the roof with the plurality of concrete roof tiles on the roof.
13. The building roof tile system and integrated solar energy system of clause 12, wherein the at least one solar thermal roof tile includes a frame having a length, width and height similar to a concrete roof tile's length, width and height so that the at least one solar thermal roof tile blends with the plurality of concrete roof tiles, when mounted on the roof.
14. The building roof tile system and integrated solar energy system of clause 12 or 13, wherein a plurality of solar thermal roof tiles are mounted on the building roof.
15. The building roof tile system and integrated solar energy system of any of clauses 12 to 14, wherein each of the plurality of solar thermal roof tiles includes a transparent or translucent cover to trap solar energy inside the solar thermal roof tile.
16. The building roof tile system and integrated solar energy system of any of clauses 12 to 15, wherein the at least one solar thermal roof tile includes a transparent or translucent cover to trap solar energy inside the solar thermal roof tile.
17. The building roof tile system and integrated solar energy system of any of clauses 12 to 16, wherein the absorber is a black metal sheet designed to absorb solar energy.
18. The building roof tile system and integrated solar energy system of any of clauses 12 to 17, wherein each of the plurality of solar thermal roof tiles includes an absorber with pipes carry a heat transfer fluid that is water, and wherein the pipes are connected to one another so that cold water enters the pipes and hot water leaves the pipes as a result of the plurality of solar thermal roof tiles absorbing solar energy.
19. The building roof tile system and integrated solar energy system of any of clauses 12 to 18, wherein each of the plurality of solar thermal roof tiles includes the heat pipes carrying a heat transfer fluid that is water, and wherein the heat pipes are connected to one another so that cold water enters the pipes and hot water leaves the pipes as a result of the plurality of solar thermal roof tiles absorbing solar energy.
20. A building roof tile system and integrated solar energy system comprising:
   a plurality of concrete roof tiles covering a first portion of the building roof,
   a plurality of solar electric roof tiles covering a second portion of the building roof, each of the solar electric roof tiles including a plurality of photovoltaic cells connected together to generate electric power, and
   a plurality of solar thermal roof tiles covering a third portion of the building roof, the plurality of solar thermal roof tiles each including an absorber for absorbing and transporting solar heat,
   the plurality of solar electric roof tiles and the plurality of solar thermal roof tiles each being sized, shaped and mounted on the roof so that the plurality of solar electric roof tiles and the plurality of solar thermal roof tiles blend discretely into the roof with the plurality of concrete roof tiles on the roof,
   the plurality of solar electric roof tiles being positioned on the building roof so as to be contiguous to one another in an area corresponding to the second portion of the building roof, and the plurality of solar thermal roof tiles being positioned at the uppermost portion of the building roof tile system,
      each of the plurality of solar thermal roof tiles including a transparent cover to trap solar energy inside the solar thermal roof tile, and
      each of the solar thermal roof tile absorbers including pipes carrying a heat transfer fluid that is water, the pipes being connected to one another so that cold water enters the pipes and hot water leaves the pipes as a result of the plurality of solar thermal roof tiles absorbing solar energy.

## Claims

1. A building roof tile system and integrated solar energy system comprising:
a plurality of concrete roof tiles (42) covering a first portion of the building roof,
a plurality of solar electric roof tiles (10) covering a second portion of the building roof, each of the solar electric roof tiles (10) including a plurality of photovoltaic cells (16) connected together to generate electric power, and
at least one solar thermal roof tile (20) covering a third portion of the building roof, the at least one solar thermal roof tile (20) including an absorber (24) with pipes (26) carry a heat transfer fluid for absorbing and transporting solar heat or a plurality of evacuated glass tubes (24) with heat pipes (26) inside carrying a heat transfer fluid for absorbing and transporting solar heat,
the plurality of solar electric roof tiles (10) and the at least one solar thermal roof tile (20) each being sized, shaped and mounted on the roof so that the plurality of solar electric roof tiles (10) and the at least one solar thermal roof tile (20) blend discretely into the roof with the plurality of concrete roof tiles (42) on the roof.

2. The building roof tile system and integrated solar energy system of claim 1, wherein the plurality of solar electric roof tiles (10) and the at least one solar thermal roof tile (20) each includes a frame (12, 22) having a length, width and height similar to a concrete roof tile's (42) length, width and height so that the plurality of solar electric roof tiles (10) and the at least one solar thermal roof tile (20) blend with the plurality of concrete roof tiles (42), when mounted on the roof.

3. The building roof tile system and integrated solar energy system of any preceding claim, wherein the plurality of solar electric roof tiles (10) are positioned on the building roof so as to be contiguous to one another in an area corresponding to the second portion of the building roof, and wherein the at least one solar thermal roof tile (20) is positioned on the building roof adjacent to the plurality of solar electric roof tiles (10).

4. The building roof tile system and integrated solar energy system of any preceding claim, wherein the plurality of solar electric roof tiles (10) and the at least one solar thermal roof tile (20) are positioned on the building roof so as to be substantially in the center of the building roof and the plurality of concrete roof tiles (42) are positioned on the building roof so as to surround the plurality of solar electric roof tiles (42) and the at least one solar thermal roof tile.

5. The building roof tile system and integrated solar energy system of any preceding claim, wherein a plurality of solar thermal roof tiles (20) are mounted on the building roof and used with the plurality of solar electric roof tiles (10).

6. The building roof tile system and integrated solar energy system of claim 5, wherein each of the plurality of solar thermal roof tiles (20) includes the absorber (24) with pipes (26) carry a heat transfer fluid and a transparent cover (28) to trap solar energy inside the solar thermal roof tile (20).

7. The building roof tile system and integrated solar energy system of any preceding claim, wherein the at least one solar thermal roof tile (20) includes the absorber (24) with pipes (26) carry a heat transfer fluid and a transparent cover (28) to trap solar energy inside the solar thermal roof tile.

8. The building roof tile system and integrated solar energy system of any preceding claim, wherein the absorber (24) is a dark metal sheet designed to absorb solar energy and the absorber pipes (26) carry a heat transfer fluid that is water.

9. The building roof tile system and integrated solar energy system of any of claims 5 to 8, wherein the each of the plurality of solar thermal roof tiles (20) includes the heat pipes (26) and the heat pipes (26) are dark colored metal pipes carrying a heat transfer fluid that is water.

10. The building roof tile system and integrated solar energy system of any of claims 5 to 9, wherein each of the plurality of solar thermal roof tiles (20) includes an absorber (24) with pipes (26) carry a heat transfer fluid that is water, and wherein the pipes (26) are connected to one another so that cold water enters the pipes (25) and hot water leaves the pipes (27) as a result of the plurality of solar thermal roof tiles (20) absorbing solar energy.
